# EUROPÄISCHE PATENTANMELDUNG

(11) **EP 4 764 210 A1**
(43) Veröffentlichungstag der Anmeldung: **24.06.2026**
(21) Anmeldenummer: 25216808.3
(22) Anmeldetag: 19.11.2025
(51) Int. Cl.: F03D 15/10

(54) **ANTRIEBSSTRANG UND WINDKRAFTANLAGE**

(30) Priorität: 17.12.2024 DE 102024212027
(71) Anmelder: ZF Friedrichshafen AG, 88046 Friedrichshafen (DE); ZF Wind Power Antwerpen NV, 3920 Lommel (BE)
(72) Erfinder: Smook, Warren, 3040 Huldenberg (BE)
(74) Vertreter: ZF Friedrichshafen AG

(57) **Zusammenfassung**

Die Erfindung betrifft einen Antriebsstrang für eine Windkraftanlage (10) mit einer Gondel (20). Der Antriebsstrang weist einen Generator (24), ein Getriebe (22) und ein Rotorlagergehäuse (40) auf. In dem Rotorlagergehäuse (40) ist wenigstens ein Lager (18) zum drehbaren Lagern einer Rotorwelle (16) befestigbar. Das Rotorlagergehäuse (40) ist zum Befestigen an einem Maschinenbett (42) der Gondel (20) ausgebildet. Das Getriebe (22) ist radial innerhalb des Generators (24) angeordnet. Das Getriebe (22) ist über das Rotorlagergehäuse (40) an dem Maschinenbett (42) befestigbar. Der Generator (24) ist über das Rotorlagergehäuse (40) an dem Maschinenbett (42) befestigbar. Zudem betrifft die Erfindung eine Windkraftanlage (10).

## Beschreibung

Die vorliegende Erfindung bezieht sich auf einen Antriebsstrang einer Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben. Ein Antriebsstrang der Windkraftanlage muss in der Gondel der Windkraftanlage abgestützt werden. Diese Befestigung kann jedoch sehr komplex sein und viele Teile benötigen. Zudem kann eine Wartung und ein Austausch einzelner Komponenten des Antriebsstrangs je nach Befestigungslösung sehr aufwendig sein. In der EP 1 537 331 A1 ist eine Windenergieanlage beschrieben, bei welcher ein Getriebe und ein Generator einzeln lösbar mit einem Maschinenträger verbunden sind. Der Maschinenträger weist ein vorderes und ein hinteres Rotorlager auf. Deshalb können das Getriebe, der Generator und der Maschinenträger nur gemeinsam an der Windenergieanlage montiert werden. Der Antriebsstrang ist dadurch groß und schwer, womit ein Transport zum Aufstellungsort der Windkraftanlage und eine Montage nur mit großem Aufwand möglich sind.

### Darstellung der Erfindung

Ein erster Aspekt betrifft einen Antriebsstrangs für eine Windkraftanlage. Die Windkraftanlage weist eine Gondel auf. Die Gondel weist ein Maschinenbett auf. Die Windkraftanlage kann einen Turm aufweisen, an welchem die Gondel angeordnet ist. Der Turm erstreckt sich beispielsweise mit seiner Längserstreckung in eine vertikale Richtung. Die Gondel kann beispielsweise drehbar oder drehfest an dem Turm gelagert sein. Die Gondel kann beispielsweise oberseitig an dem Turm angeordnet sein. Der Turm kann beispielsweise hohl ausgebildet sein. Der Turm kann sich zu seinem oberen Ende hin verjüngen. Der Turm kann beispielsweise aus mehreren aufeinander gestapelten Turmelementen gebildet sein. Der Turm kann beispielsweise Stahl und alternativ oder zusätzlich Beton als Werkstoff aufweisen.

Der Antriebsstrang weist ein Getriebe und einen Generator auf. Zudem kann der Antriebsstrang oder die Windkraftanlage einen Rotor aufweisen. Weiterhin kann der Antriebsstrang oder die Windkraftanlage eine Rotorwelle aufweisen. Der Rotor kann über das Getriebe den Generator antreiben, um elektrische Energie zu erzeugen. Der Rotor kann mit dem Getriebe über die Rotorwelle verbunden sein. Der Rotor, das Getriebe und der Generator können beispielsweise an einer Gondel der Windkraftanlage befestigt sein, beispielsweise gemeinsam durch eine Hauptlagerung. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Der Antriebsstrang kann optional auch eine Bremse aufweisen.

Der Antriebsstrang weist ein Rotorlagergehäuse auf. In dem Rotorlagergehäuse ist wenigstens ein Lager zum drehbaren Lagern der Rotorwelle befestigbar. In dem Rotorlagergehäuse können auch zwei Lager zum drehbaren Lagern der Rotorwelle angeordnet sein. Sofern nur ein Lager vorgesehen ist, kann die Rotorwelle über ein weiteres Lager in einer anderen Komponente des Antriebsstrangs gelagert sein, wie in einem Getriebegehäuse oder einem Generatorgehäuse. Sofern zwei Lager in dem Gehäuse zum Lagern der Rotorwelle vorgesehen sind, kann der Antriebsstrang frei von weiteren Lagern für die Rotorwelle in anderen Komponenten des Antriebsstrangs sein. Die Lager können Teil des Antriebsstrangs bilden oder dazu separat sein. Die Lager können beispielsweise als Wälzlager ausgebildet sein. Geeignete Lager sind beispielsweise Kegelrollenlager. Das Rotorlagergehäuse kann beispielsweise ein Gussteil oder Schmiedeteil sein. Das Rotorlagergehäuse kann einstückig oder mehrteilig ausgebildet sein.

Das Rotorlagergehäuse ist zum Befestigen an dem Maschinenbett der Gondel ausgebildet. Das Maschinenbett kann beispielsweise ein Schmiedeteil oder Gussteil sein. Das Maschinenbett kann Schnittstellen zur Befestigung des Antriebsstrangs aufweisen, wie beispielsweise Auflageflächen für das Rotorlagergehäuse. Das Rotorlagergehäuse ist ein zu dem Maschinenbett separates Bauteil. Das Rotorlagergehäuse kann mit dem Maschinenbett beispielsweise verschraubt oder vernietet sein.

Das Rotorlagergehäuse und das eine Lager, welches auch als erstes Lager bezeichnet wird, sowie das optionale zweite Lager in dem Rotorlagergehäuse können eine Hauptlagerung des Antriebsstrangs ausbilden. Die Windkraftanlage kann frei von weiteren Lagern sein, über welche der Antriebsstrang an dem Maschinenbett und insgesamt an der Gondel der Windkraftanlage abstützbar ist. Die Hauptlagerung kann frei von weiteren Lagern sein. Die Rotorwelle kann nur über die Hauptlagerung an der Gondel gelagert sein. Das Getriebe kann beispielsweise ebenfalls nur über die Hauptlagerung an der Gondel gelagert sein. Dann sind beispielsweise stationäre Bauteile des Gehäuses, wie ein Getriebegehäuse, an dem Rotorlagergehäuse befestigt. Wenigstens ein drehbares Teil, wie eine Eingangswelle des Getriebes, kann über die Rotorwelle an den beiden Lagern gelagert sein. Optional kann auch der Generator nur über die Hauptlagerung an der Gondel gelagert sein. Dafür können beispielsweise stationäre Bauteile des Generators, wie ein Generatorgehäuse, an dem Rotorlagergehäuse befestigt sein. Die Befestigung kann direkt oder über ein anderes Bauteil des Antriebsstrangs, wie das Getriebegehäuse, erfolgen.

Ein erstes der beiden Lager kann axial in einem rotorseitigen Endbereich des Rotorlagergehäuses angeordnet sein. Das erste Lager bildet beispielsweise ein rotorseitiges Lager. Ein zweites der beiden Lager kann axial in einem generatorseitigen Endbereich des Rotorlagergehäuses angeordnet sein. Das zweite Lager bildet beispielsweise ein generatorseitiges Lager. Die beiden Lager können axial zueinander beabstandet sein. Die beiden Lager können koaxial angeordnet sein. In dem Axialbereich, in welchem die beiden Lager angeordnet sind, kann das Gehäuse jeweils verdickt und alternativ oder zusätzlich versteift ausgebildet sein. Das Gehäuse kann einen geschlossenen umlaufenden Ringbereich in dem Axialbereich aufweisen, in welchem die beiden Lager jeweils angeordnet sind. Die axiale Richtung, eine radiale Richtung und eine Umfangsrichtung kann durch die Drehachse der Rotorwelle und alternativ oder zusätzlich durch die Drehachse der jeweiligen Lager definiert sein.

Das Getriebe kann eine Eingangswelle und eine Ausgangswelle aufweisen. Das Getriebe kann ein Getriebegehäuse aufweisen. Der Generator kann einen Stator und einen Läufer aufweisen. Der Generator kann ein Generatorgehäuse aufweisen. Die Eingangswelle des Getriebes kann mit der Rotorwelle verbunden sein. Die Ausgangswelle des Getriebes kann mit dem Läufer des Generators verbunden sein. Das Generatorgehäuse kann den Stator ausbilden oder der Stator kann in dem Generatorgehäuse befestigt sein. Das Getriebe kann einen Planetenradsatz aufweisen. Beispielsweise kann ein Planetenträger die Eingangswelle ausbilden. Beispielsweise kann ein Sonnenrad die Ausgangswelle ausbilden. Beispielsweise kann ein Hohlrad in dem Getriebegehäuse befestigt sein.

Das Getriebe ist über das Rotorlagergehäuse an dem Maschinenbett befestigbar. Der Generator ist über das Rotorlagergehäuse an dem Maschinenbett befestigbar. Beispielsweise kann das Getriebe nur über das Rotorlagergehäuse mit dem Maschinenbett verbunden sein. Das Getriebe kann dagegen nicht direkt mit der Gondel verbunden sein. Beispielsweise kann der Generator nur über das Rotorlagergehäuse mit dem Maschinenbett verbunden sein. Der Generator kann dagegen nicht direkt mit der Gondel verbunden sein. Der Generator kann direkt mit dem Rotorlagergehäuse verbunden sein oder über ein Zwischenteil. Das Zwischenteil kann beispielsweise durch einen Teil des Getriebes gebildet sein, wie einen Teil des Getriebegehäuses, oder ein dediziertes separates Verbindungsteil. Das Getriebe kann direkt mit dem Rotorlagergehäuse verbunden sein oder über ein Zwischenteil. Das Zwischenteil kann beispielsweise durch einen Teil des Generators gebildet sein, wie einen Teil des Generatorgehäuses, oder ein dediziertes separates Verbindungsteil. Beispielsweise können das Getriebegehäuse und der Generatorgehäuse jeweils direkt an dem Rotorlagergehäuse befestigt sein, beispielsweise durch jeweils eine oder eine gemeinsame Verschraubung. Beispielsweise kann das Getriebegehäuse direkt an dem Rotorlagergehäuse befestigt sein und das Generatorgehäuse über das Getriebegehäuse an dem Rotorlagergehäuse befestigt sein, oder umgekehrt. Beispielsweise ist das Getriebegehäuse an dem Rotorlagergehäuse angeschraubt und das Generatorgehäuse an dem Getriebegehäuse angeschraubt, oder umgekehrt. So kann getrennt ein Transport, eine Montage, eine Wartung und ein Austausch von Komponenten des Antriebsstrangs möglich sein. Beispielsweise kann das Getriebe von dem Antriebsstrang entfernt werden, während der Generator an dem Rotorlagergehäuse befestigt verbleibt. Auch eine Teilmontage des Antriebsstrangs und ein Testen einzelner Komponenten kann so möglich sein. Der Turm und die Gondel können zunächst mit dem Maschinenbett aufgestellt werden und anschließend der Antriebsstrang daran montiert werden. Beispielsweise können der Generator und das Getriebe allein und alternativ oder zusätzlich dazu ausgebildet sein, auch im unbefestigten Zustand, also ohne Verbindung zu dem Rotorlagergehäuse, betriebsbereit zu sein. Dann kann ein Testen vor einer Endmontage in der Windkraftanlage einfach erfolgen.

Das Getriebe ist radial innerhalb des Generators angeordnet. Beispielsweise ist das Getriebe innerhalb eines Generatorgehäuses angeordnet. Der Generator kann eine axiale Durchgangsöffnung oder zumindest einen radial zentralen Freiraum aufweisen, in welchem das Getriebe angeordnet ist. Beispielsweise kann der Generator radial innerhalb des Stators und Läufers angeordnet sein und wenigstens teilweise oder komplett in dem gleichen Axialbereich. Dadurch kann der Antriebsstrang axial sehr kurz bauend sein. Zudem können der Generator und das Getriebe axial bewegt werden, ohne sich dabei gegenseitig zu blockieren, beispielsweise für die Montage, Austausch und alternativ oder zusätzlich Wartung. Das Getriebe und alternativ oder zusätzlich der Generator können axial neben dem Rotorlagergehäuse angeordnet sein, beispielsweise auf einer dem Rotor axial abgewandten Seite. Bei der Bauweise des Getriebes radial innerhalb des Generators kann eine Übersetzung des Getriebes im Vergleich zu einer Bauweise mit dem Generator axial neben dem Generator klein sein, da der radiale Bauraum begrenzt ist. Der Generator kann einem deshalb eingeleiteten hohen Drehmoment aufgrund eines großen Durchmessers trotzdem gut widerstehen. Die Kosten für Wartung und Montage können bei der hier beschriebenen Bauweise des Antriebsstrangs gering sein, wodurch eventuell hohe Anschaffungskosten für den Generator mit großem Durchmesser überkompensiert werden können. Zudem kann das Getriebe mit einer geringen Übersetzung kostengünstig sein.

Das Generatorgehäuse kann eine Zugangsöffnung aufweisen, beispielsweise auf einer axial dem Rotorlagergehäuse abgewandten Seite. Durch die Zugangsöffnung kann das Getriebe zugänglich sein, beispielsweise für die Montage, Austausch und alternativ oder zusätzlich Wartung. Der Deckel kann als Nabe ausgebildet sein, die als Verbindungselement zwischen der Ausgangswelle des Getriebes und dem Läufer des Generators fungiert. Der Deckel kann drehbar an dem restlichen Generatorgehäuse befestigt sein. Der Deckel kann über die Bremse an dem restlichen Generatorgehäuse festsetzbar sein. Dadurch kann die Bremse bauraumgünstig integrierbar sein.

In einer Ausführungsform des Antriebsstrangs kann es vorgesehen sein, dass die Befestigung des Generators an dem Maschinenbett über das Rotorlagergehäuse unabhängig von dem Getriebe lösbar ist. Beispielsweise kann die Befestigung des Generators an dem Rotorlagergehäuse unabhängig von der Befestigung des Getriebes an dem Rotorlagergehäuse lösbar sein. Dafür können beispielsweise unterschiedliche Befestigungsmittel für das Befestigen des Generators an dem Rotorlagergehäuse vorgesehen sein als für die Befestigung des Getriebes an dem Rotorlagergehäuse. Die Befestigungsmittel können beispielsweise als Schrauben, Nieten oder Spannvorrichtung ausgebildet sein. Alternativ oder zusätzlich können dafür die Befestigungsmittel für die Befestigung des Generators an dem Rotorlagergehäuse auch bei montiertem Getriebe zugänglich sein. Der Antriebsstrang kann für eine Montage, Austausch und alternativ oder zusätzlich Wartung des Generators unabhängig von dem Getriebe ausgebildet sein. Der Generator kann von dem Antriebsstrang demontierbar sein, während das Getriebe montiert bleibt.

In einer Ausführungsform des Antriebsstrangs kann es vorgesehen sein, dass die Befestigung des Getriebes an dem Maschinenbett über das Rotorlagergehäuse unabhängig von dem Generator lösbar ist. Beispielsweise kann die Befestigung des Getriebes an dem Rotorlagergehäuse unabhängig von der Befestigung des Generators an dem Rotorlagergehäuse lösbar sein. Dafür können beispielsweise unterschiedliche Befestigungsmittel für das Befestigen des Getriebes an dem Rotorlagergehäuse vorgesehen sein als für die Befestigung des Generators an dem Rotorlagergehäuse. Alternativ oder zusätzlich können dafür die Befestigungsmittel für die Befestigung des Getriebes an dem Rotorlagergehäuse auch bei montiertem Generator zugänglich sein. Zudem kann der Läufer des Generators temporär für die Demontage des Getriebes fixierbar sein, beispielsweise durch eine Verschraubung mit dem Rotorlagergehäuse und alternativ oder zusätzlich dem Generatorgehäuse. Der Antriebsstrang kann für eine Montage, Austausch und alternativ oder zusätzlich Wartung des Getriebes unabhängig von dem Generator ausgebildet sein. Das Getriebe kann von dem Antriebsstrang demontierbar sein, während der Generator montiert bleibt.

In einer Ausführungsform können sowohl der Generator als auch das Getriebe jeweils unabhängig voneinander an dem Rotorlagergehäuse befestigbar und von dem Rotorlagergehäuse lösbar sein. In einer Ausführungsform kann nur der Generator gelöst werden, während das Getriebe an dem Rotorlagergehäuse befestigt verbleibt, wohingegen für das Lösen des Getriebes von dem Rotorlagergehäuse auch der Generator von dem Rotorlagergehäuse gelöst werden muss. In einer Ausführungsform kann nur das Getriebe gelöst werden, während der Generator an dem Rotorlagergehäuse befestigt verbleibt, wohingegen für das Lösen des Generators von dem Rotorlagergehäuse auch das Getriebe von dem Rotorlagergehäuse gelöst werden muss.

In einer Ausführungsform des Antriebsstrangs kann es vorgesehen sein, dass das Rotorlagergehäuse einen Flansch aufweist. An dem Flansch kann das Getriebe befestigt sein, beispielsweise mit seinem Getriebegehäuse, und alternativ oder zusätzlich der Generator, beispielsweise mit seinem Generatorgehäuse. Der Flansch kann ein sich radial erstreckender Wandbereich sein. Der Flansch kann radial nach außen von einer Wand des Rotorlagergehäuses vorstehen. Der Flansch kann axial im Bereich des zweiten Lagers ausgebildet sein, sofern das zweite Lager in dem Rotorlagergehäuse angeordnet ist. Der Flansch kann einstückig mit einem Hauptteil des Rotorgehäuses, in welchem beispielsweise das erste Lager angeordnet ist, ausgebildet sein. Der Flansch kann in einem Endbereich des Rotorlagergehäuses ausgebildet sein, welcher dem Rotor abgewandt ist. Der Flansch kann eine Stirnfläche ausbilden, an welchem der Generator und das Getriebe befestigt sind. Die Stirnseite kann dem Rotor abgewandt sein. Beispielsweise kann das Getriebegehäuse an dem Flansch anliegen und mit Befestigungsmitteln, wie Schrauben, Nieten, Spannvorrichtungen oder Bolzen, befestigt sein. Beispielsweise kann das Generatorgehäuse an dem Flansch anliegen und mit Befestigungsmitteln, wie Schrauben, Nieten, Spannvorrichtungen oder Bolzen, befestigt sein. Die Befestigungsmittel können gemeinsam das Getriebegehäuse und das Generatorgehäuse an dem Flansch befestigen. Alternativ können auch jeweils separate Befestigungsmittel für das Befestigen des Getriebegehäuses und des Generatorgehäuses vorgesehen sein. Das Getriebegehäuse kann radial innen zu dem Generatorgehäuse an dem Flansch anliegen und befestigt sein.

In einer Ausführungsform des Antriebsstrangs kann es vorgesehen sein, dass der Antriebsstrang ein Verbindungsteil aufweist. Das Verbindungsteil kann als eine sich radial erstreckende Scheibe ausgebildet sein, beispielsweise aus einem metallischen Werkstoff und alternativ oder zusätzlich mit zentraler axialer Durchgangsöffnung. Das Verbindungsteil kann an dem Rotorlagergehäuse befestigt sein. Über das Verbindungsteil können der Generator und alternativ oder zusätzlich das Getriebe mit dem Rotorlagergehäuse verbunden sein. Das Verbindungsteil kann an dem Flansch befestigt sein. Das Verbindungsteil kann eine Verlängerung des Flansches des Rotorlagergehäuses bilden, beispielsweise in radialer Richtung. Das Verbindungsteil kann beispielsweise das Generatorgehäuse und alternativ oder zusätzlich das Getriebegehäuse auf einer dem Rotorlagergehäuse zugewandten Seite verschließen. Das Verbindungsteil kann einen Teil des Generatorgehäuses und alternativ oder zusätzlich des Getriebegehäuses bilden. Das Verbindungsteil kann axial zwischen dem Rotorlagergehäuse und dem Generator und alternativ oder zusätzlich dem Getriebe angeordnet sein. Das Getriebe und alternativ oder zusätzlich der Generator können durch die gleichen Befestigungsmittel an dem Verbindungsteil befestigt sein wie das Verbindungsteil mit dem Rotorlagergehäuse. Es können aber auch Befestigungsmittel vorgesehen sein, mit welchen das Verbindungsteil separat zu dem Getriebe und alternativ oder zusätzlich dem Generator an dem Rotorlagergehäuse befestigt ist.

In einer Ausführungsform des Antriebsstrangs kann es vorgesehen sein, dass das Getriebe an dem Verbindungsteil befestigt ist. Dadurch kann das Getriebe einfach montierbar sein. Das Verbindungsteil und das Getriebegehäuse können in diesem Fall separate Bauteile sein. Das Getriebe ist dann beispielsweise nur mittelbar mit dem Rotorlagergehäuse über das Verbindungsteil befestigt und berührt das Rotorlagergehäuse beispielsweise nicht. Das Verbindungsteil kann beispielsweise an dem Hohlrad des Getriebes befestigt sein.

In einer Ausführungsform des Antriebsstrangs kann es alternativ vorgesehen sein, dass das Verbindungsteil ein Teil des Getriebegehäuses ausbildet. Beispielsweise kann das Verbindungsteil eine Stirnseite des Getriebegehäuses ausbilden, welche dem Rotorlagergehäuse zugewandt ist. Das Verbindungsteil kann in diesem Fall beispielsweise an dem restlichen Getriebegehäuse lösbar oder unlösbar befestigt sein oder damit einstückig ausgebildet sein.

In einer Ausführungsform des Antriebsstrangs kann es vorgesehen sein, dass der Generator an dem Verbindungsteil befestigt ist. Dadurch kann der Generator einfach montierbar sein. Das Verbindungsteil und das Generatorgehäuse können in diesem Fall separate Bauteile sein. Der Generator ist dann beispielsweise nur mittelbar mit dem Rotorlagergehäuse über das Verbindungsteil befestigt und berührt das Rotorlagergehäuse beispielsweise nicht. Das Verbindungsteil kann beispielsweise an dem Stator des Generators befestigt sein.

In einer Ausführungsform des Antriebsstrangs kann es alternativ vorgesehen sein, dass das Verbindungsteil ein Teil des Generatorgehäuses ausbildet. Beispielsweise kann das Verbindungsteil eine Stirnseite des Generatorgehäuses ausbilden, welche dem Rotorlagergehäuse zugewandt ist. Das Verbindungsteil kann in diesem Fall beispielsweise an dem restlichen Generatorgehäuse lösbar oder unlösbar befestigt sein oder damit einstückig ausgebildet sein.

Das Verbindungsteil kann auch sowohl einen Teil des Generatorgehäuses als auch des Getriebegehäuses ausbilden. Dann können diese zusammen einfach an dem Rotorlagergehäuse befestigt werden. Der Generator und das Getriebe können in diesem Fall eine Einheit bilden, welche nur durch ein teilweises Zerlegen von dem Getriebe und alternativ oder zusätzlich von dem Generator trennbar ist.

Ein zweiter Aspekt betrifft eine Windkraftanlage, welche den Antriebsstrang gemäß dem ersten Aspekt aufweist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage weist die Gondel auf. Die Gondel weist das Maschinenbett auf. Die Windkraftanlage kann den Turm aufweisen. Das Rotorlagergehäuse ist an dem Maschinenbett befestigt. Das Getriebe ist über das Rotorlagergehäuse an dem Maschinenbett befestigt. Der Generator ist über das Rotorlagergehäuse an dem Maschinenbett befestigt.

### Kurze Beschreibung der Figuren

Fig. 1 veranschaulicht schematisch eine Windkraftanlage mit einem Antriebsstrang.
Fig. 2 veranschaulicht schematisch in einer Schnittansicht eine erste Ausführungsform des Antriebsstrang für die Windkraftanlage von Fig. 1.
Fig. 3 veranschaulicht schematisch in einer Schnittansicht eine zweite Ausführungsform des Antriebsstrang für die Windkraftanlage von Fig. 1.
Fig. 4 veranschaulicht schematisch in einer Schnittansicht eine dritte Ausführungsform des Antriebsstrang für die Windkraftanlage von Fig. 1.

### Detaillierte Beschreibung von Ausführungsformen

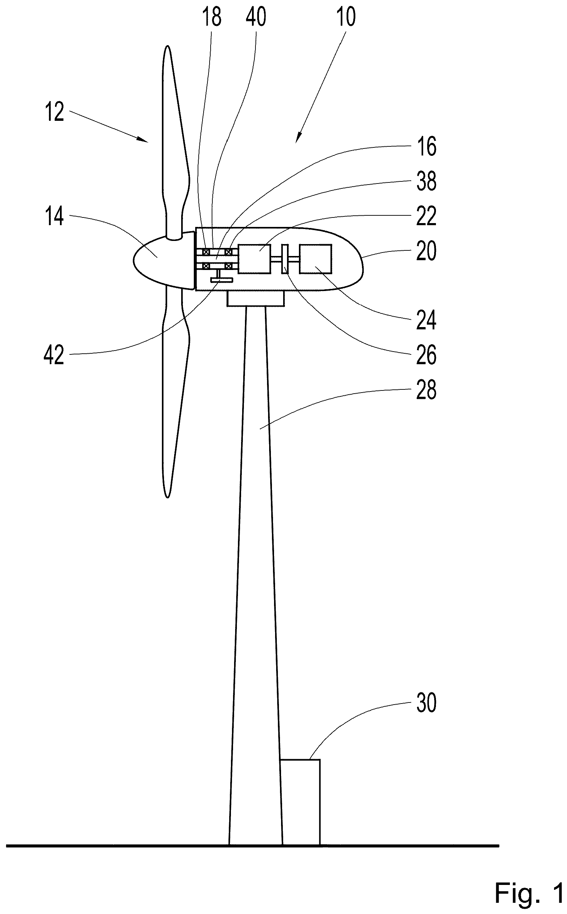

Fig. 1 veranschaulicht eine Windkraftanlage 10 mit einem Antriebsstrang in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18, 38 in einer Gondel 20 gelagert. Dafür ist ein Rotorlagergehäuse 40 vorgesehen, welches an einem Maschinenbett 42 der Gondel 20 befestigt ist. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 einen Netzanschluss 30 auf. Ein erstes der Wälzlager 18 ist dem Rotor 12 zugewandt und wird auch als rotorseitiges Lager 18 bezeichnet. Ein zweites der Wälzlager 38 ist dem Generator 24 zugewandt und wird auch als generatorseitiges Lager 38 bezeichnet. Die beiden Wälzlager 18, 38 sind hier als Kegelrollenlager ausgebildet. Wenigstens das Rotorlagergehäuse 40, das Getriebe 22 und der Generator 24 bilden Komponenten des Antriebsstrangs der Windkraftanlage 10.

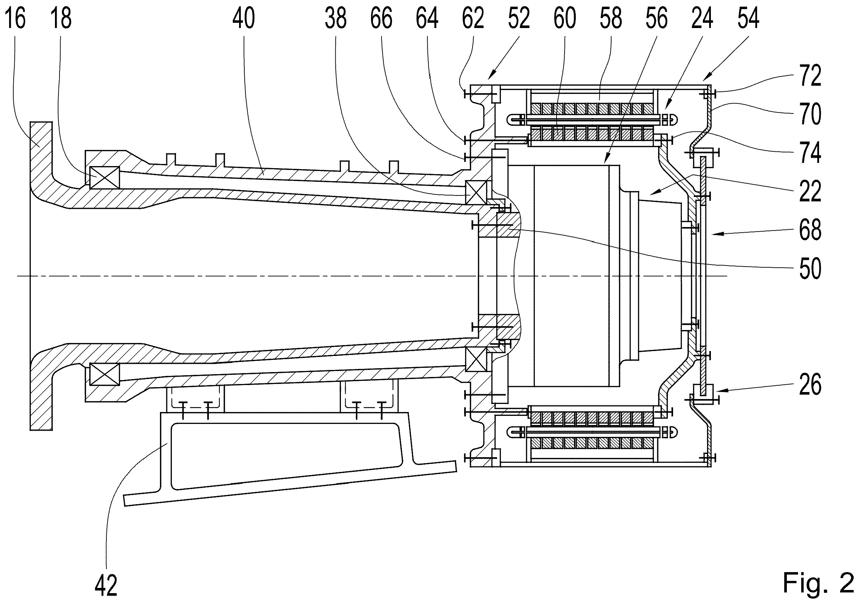

In der Darstellung von Fig. 1 ist das Getriebe 22 axial zwischen dem Rotorlagergehäuse 40 und dem Generator 24 angeordnet. Sowohl der Generator 24 als auch das Getriebe 22 sind dabei ausschließlich über das Rotorlagergehäuse 40 an dem Maschinenbett 42 befestigt. Der Generator 24 ist dabei mittelbar über das Getriebe 22 mit dem Rotorlagergehäuse 40 verbunden und damit sowohl über das Getriebe 22 als auch über das Rotorlagergehäuse 40 an dem Maschinenbett 42 befestigt. Dadurch muss der Generator 24 ebenfalls demontiert werden, sofern das Getriebe 22 für eine Wartung oder einen Austausch demontiert werden soll. Die Figs. 2 bis 4 zeigen Ausführungsformen des Antriebsstrangs mit einer anderen Gestaltung des Antriebsstrangs, welcher ebenfalls an dem Maschinenbett 42 der Windkraftanlage 10 nur über das Rotorlagergehäuse 40 befestigt ist. Es werden im Folgenden die Unterschiede zu der generischen Bauweise von Fig. 1 erläutert.

In Fig. 2 ist eine erste Ausführungsform des Antriebsstrangs der Windkraftanlage 10 gezeigt. Das Rotorlagergehäuse 40 ist einstückig ausgebildet und darin ist die Rotorwelle 16 über die zwei in dem Rotorlagergehäuse 40 befestigten Lager 18, 38 gelagert. Das Maschinenbett 42 ist ein zu dem Rotorlagergehäuse 40 separates Bauteil, an welchem das Rotorlagergehäuse 40 angeschraubt ist. Die Rotorwelle 16 ist mit einer Eingangswelle 50 des Getriebes 22 durch eine Verschraubung befestigt. Die Eingangswelle 50 ist hier als ein Planetenträger eines Planetenradsatzes des Getriebes 22 ausgebildet. Der Generator 24 weist ein Generatorgehäuse 54 auf. Das Getriebe 22 ist radial innerhalb des Generators 24 angeordnet. Das Getriebe 22 bildet ein Getriebegehäuse 56 aus, welches vollständig innerhalb des Generatorgehäuses 54 aufgenommen ist.

Das Rotorlagergehäuse 40 bildet einen sich radial nach außen erstreckenden Flansch 52 aus, welcher axial im Bereich des zweiten Lagers 38 angeordnet ist. Der Flansch 52 bildet eine Stirnfläche aus, welche dem Generator 24 und dem Getriebe 22 zugewandt ist. An dem Flansch 52 ist radial außen das Generatorgehäuse 54 durch eine Verschraubung 62 befestigt. Der Flansch 52 bildet dabei einen axial rotorseitigen Deckel für das Generatorgehäuse 54. An dem Generatorgehäuse 54 ist ein Stator 58 des Generators 24 befestigt. Radial innerhalb zu der Befestigung des Generatorgehäuses 54 an dem Flansch 52 ist ein Läufer 60 des Generators 24 mittels einer Verschraubung 64 temporär befestigbar. Dadurch kann der Läufer 60 zur Montage, Demontage und Wartung gesichert werden, beispielsweise wenn das Getriebe 22 ausgebaut wird und der Generator 24 an seinem Platz verbleiben soll. Die Verschraubung 64 ist also im Betrieb entfernt. Radial innen zu der temporären Befestigung des Läufers 60 an dem Flansch 52 und damit auch radial innerhalb zu der Befestigung des Generatorgehäuses 54 an dem Flansch 52 ist das Getriebegehäuse 56 mittels einer Verschraubung 66 an dem Flansch 52 befestigt. Das Generatorgehäuse 54 wird teilweise durch ein Hohlrad des Planetenradsatzes des Getriebes 22 ausgebildet oder das Hohlrad ist zumindest an dem Generatorgehäuse 54 befestigt.

Die drei Verschraubungen 62, 64, 66 sind alle von außerhalb des Generatorgehäuses 54 axial von einer dem Rotor 12 zugewandten Seite des Flansches 52 zugänglich und unabhängig voneinander lösbar. Die Befestigung des Generators 24 an dem Maschinenbett 42 über das Rotorlagergehäuse 40 und die Befestigung des Getriebes 22 an dem Maschinenbett 42 über das Rotorlagergehäuse 40 sind somit unabhängig voneinander lösbar.

Das Generatorgehäuse 54 weist axial auf einer dem Rotorlagergehäuse 40 abgewandten Seite eine Zugangsöffnung auf, durch welche das Getriebe 22 passt. Die Zugangsöffnung ist durch eine Nabe 68 verschlossen. Die Nabe 68 verbindet eine Ausgangswelle des Getriebes 22 mit dem Läufer 60 des Generators 24 zur Antriebskraftübertragung. Das Generatorgehäuse 54 weist ein Halteelement 70 auf, welches lösbar mit einer Verschraubung 72 an dem restlichen Generatorgehäuse 54 befestigt ist. Durch Lösen des Halteelements 70 wird eine Verschraubung 74 zugänglich, mittels welcher die Nabe 68 an dem Läufer 60 befestigt ist. Zwischen dem Halteelement 70 und der Nabe 68. ist die Bremse 26 angeordnet. Mittels der Bremse 26 ist die Nabe 68 an dem Halteelement 70 festsetzbar. Die Bremse 26 ist so kompakt integriert und leicht für Wartung und Austausch zugänglich.

In anderen Ausführungsformen ist das zweite Lager 38 an dem Getriebegehäuse 56 oder dem Generatorgehäuse 54 befestigt.

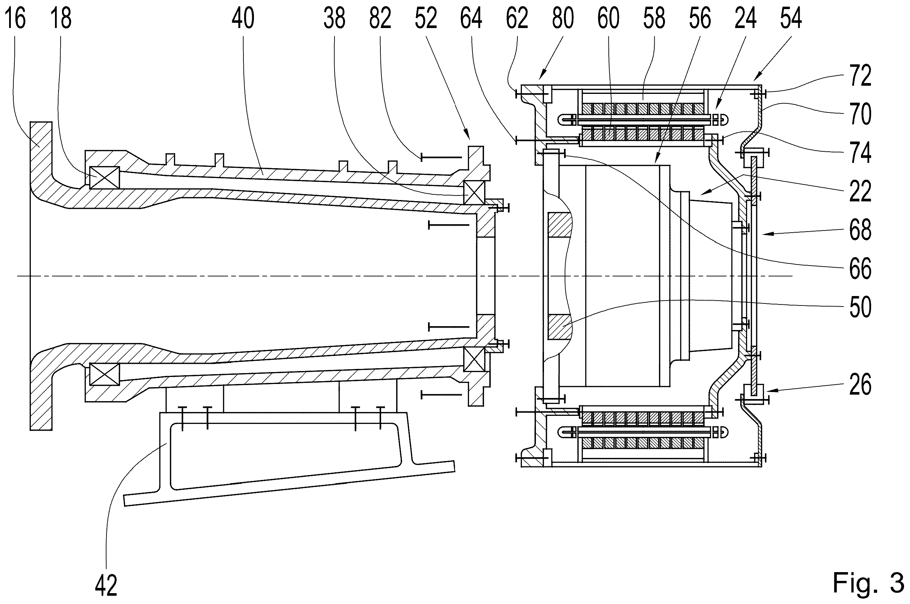

In Fig. 3 ist eine zweite Ausführungsform des Antriebsstrangs der Windkraftanlage 10 gezeigt, wobei der Generator 24 und das Getriebe 22 gelöst von dem Rotorlagergehäuse 40 dargestellt sind. Die zweite Ausführungsform ist ähnlich zu der ersten Ausführungsform und es werden nur Unterschiede erläutert. Bei der zweiten Ausführungsform ist der Flansch 52 radial kürzer ausgebildet und erstreckt sich nur ungefähr so weit wie das Getriebegehäuse 56. Der dazu bei der ersten Ausführungsform radial außenseitige Teil des Flansches 52 wird nun durch ein zu dem Rotorlagergehäuse 40 separates Verbindungsteil 80 gebildet. Das Verbindungsteil 80 ist im Wesentlichen als Scheibe mit zentraler axialer Durchgangsöffnung ausgebildet, welche sich radial erstreckt.

Das Verbindungsteil 80 ist mit dem Flansch 52 des Rotorlagergehäuse 40 verbunden. In dem in Fig. 3 gezeigten Ausführungsbeispiel wird dazu die Verschraubung 82 genutzt. Das Getriebegehäuse 56 ist nun mit der Verschraubung 66 an dem Verbindungsteil 80 statt direkt an dem Flansch 52 befestigt. In anderen Ausführungsformen wird die Verschraubung 82 genutzt, um sowohl das Getriebegehäuse 56 mit dem Verbindungsteil 80 zu befestigten als auch das Verbindungsteil 80 an dem Flansch 52 zu befestigten. Die Verschraubung 82 ist von außen aus der dem Rotor 12 zugewandten Richtung zugänglich. Die Verschraubung 66 ist nun innerhalb des Generatorgehäuses 54 bei geöffneter Zugangsöffnung aus einer Richtung, welche dem Rotor 12 abgewandt ist, zugänglich. In anderen Ausführungsformen sind der Flansch 52 und das Verbindungsteil 80 so ausgebildet, dass die Verschraubung 66 ebenfalls aus der dem Rotor 12 zugewandten Richtung zugänglich ist. Der Stator 58 und damit der Generator 24 sind nun mit der Verschraubung 62 an dem Verbindungsteil 80 befestigt und somit mittelbar über das Verbindungsteil 80 an dem Rotorlagergehäuse 40 befestigt. Der Läufer 60 kann nun temporär an dem Verbindungsteil 80 mit der Verschraubung 64 befestigt werden.

Der Generator 24 und das Getriebe 22 können so einfach als Baugruppe transportiert und montiert werden. Dadurch kann am Aufstellungsort eine Montage vereinfacht sein. Zudem können der Generator 24 und das Getriebe 22 so einfach als Baugruppe getestet werden. In anderen Ausführungsformen ist das zweite Lager 38 an dem Verbindungsteil 80 befestigt. Dadurch kann die Eingangswelle 50 des Getriebes 22 in der Baugruppe durch das zweite Lager 38 abgestützt sein, auch wenn das Getriebe 22 nicht an dem Rotorlagergehäuse 40 befestigt ist.

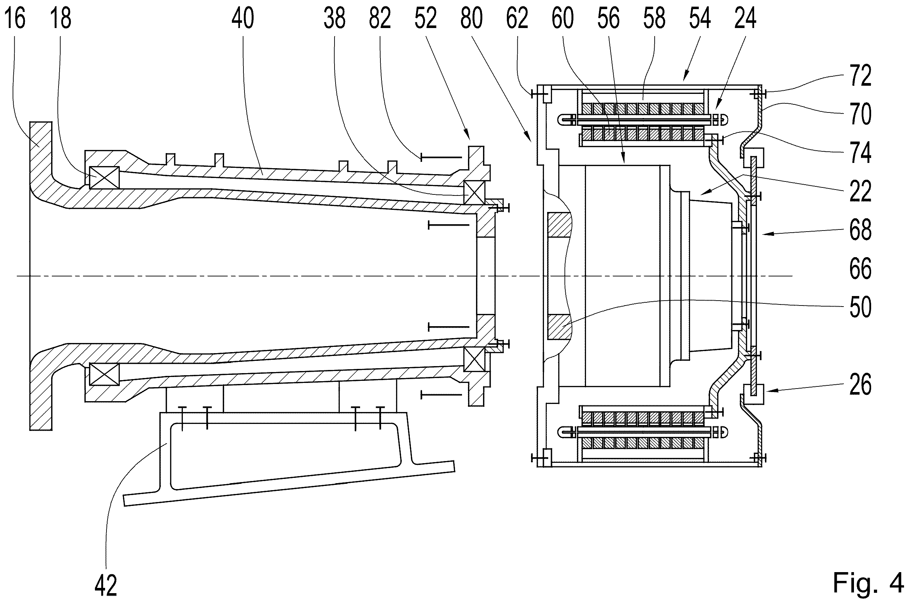

In Fig. 4 ist eine dritte Ausführungsform des Antriebsstrangs der Windkraftanlage 10 gezeigt, wobei der Generator 24 und das Getriebe 22 gelöst von dem Rotorlagergehäuse 40 dargestellt sind. Die dritte Ausführungsform ist ähnlich zu der zweiten Ausführungsform und es werden nur Unterschiede erläutert. Das Verbindungsteil 80 ist in der dritten Ausführungsform zumindest in einem betriebsbereiten Zustand des Getriebes 22 unlösbar als Teil des Getriebegehäuse 56 ausgebildet. In dem gezeigten Beispiel ist das Verbindungsteil 80 einstückig zumindest mit einem der Rotorlagergehäuse 40 zugewandten Endbereich des Getriebegehäuses 56 ausgebildet.

Die Verschraubung 66 zur Befestigung des Getriebes 22 an dem Verbindungsteil 80 entfällt somit, womit die Montage des Antriebsstrangs vereinfacht wird. Dafür kann, anders als bei der ersten und zweiten Ausführungsform, das Getriebe 22 nicht mehr von dem Rotorlagergehäuse 40 gelöst werden, während der Generator 24 an dem Rotorlagergehäuse 40 befestigt verbleibt. Bei der dritten Ausführungsform gemäß Fig. 4 ist zudem die Verschraubung 64 zum Fixieren des Läufers 60 nicht vorhanden, da das Getriebe 22 nicht unabhängig von dem Generator 24 gelöst werden kann. In anderen Ausführungsformen ist die Verschraubung 64 jedoch vorhanden, um den Läufer 60 während Wartung, Montage und Transport temporär an dem Verbindungsteil 80 zu fixieren.

### Bezugszeichen

- 10: Windkraftanlage
- 12: Rotor
- 14: Nabe
- 16: Rotorwelle
- 18, 38: Wälzlager
- 20: Gondel
- 22: Getriebe
- 24: Generator
- 26: Bremse
- 28: Turm
- 30: Netzanschluss
- 40: Rotorlagergehäuse
- 42: Maschinenbett
- 50: Eingangswelle
- 52: Flansch
- 54: Generatorgehäuse
- 56: Getriebegehäuse
- 58: Stator
- 60: Läufer
- 62, 64, 66, 72, 74, 82: Verschraubung
- 68: Nabe
- 70: Halteelement
- 80: Verbindungsteil

## Patentansprüche

1. Antriebsstrang für eine Windkraftanlage (10) mit einer Gondel (20), wobei der Antriebsstrang einen Generator (24), ein Getriebe (22) und ein Rotorlagergehäuse (40) aufweist, wobei in dem Rotorlagergehäuse (40) wenigstens ein Lager (18) zum drehbaren Lagern einer Rotorwelle (16) befestigbar ist, und wobei das Rotorlagergehäuse (40) zum Befestigen an einem Maschinenbett (42) der Gondel (20) ausgebildet ist, wobei das Getriebe (22) radial innerhalb des Generators (24) angeordnet ist, wobei das Getriebe (22) über das Rotorlagergehäuse (40) an dem Maschinenbett (42) befestigbar ist und wobei der Generator (24) über das Rotorlagergehäuse (40) an dem Maschinenbett (42) befestigbar ist.

2. Antriebsstrang nach Anspruch 1, **dadurch gekennzeichnet, dass** die Befestigung des Generators (24) an dem Maschinenbett (42) über das Rotorlagergehäuse (40) unabhängig von dem Getriebe (22) lösbar ist.

3. Antriebsstrang nach Anspruch 1 oder 2, **dadurch gekennzeichnet, dass** die Befestigung des Getriebes (22) an dem Maschinenbett (42) über das Rotorlagergehäuse (40) unabhängig von dem Generator (24) lösbar ist.

4. Antriebsstrang nach einem der vorhergehenden Ansprüche, **dadurch gekennzeichnet, dass** das Rotorlagergehäuse (40) einen Flansch (52) aufweist, an welchem das Getriebe (22) befestigt ist und an welchem der Generator (24) befestigt ist.

5. Antriebsstrang nach einem der vorhergehenden Ansprüche, **dadurch gekennzeichnet, dass** der Antriebsstrang ein Verbindungsteil (80) aufweist, wobei das Verbindungsteil (80) an dem Rotorlagergehäuse (40) befestigt ist.

6. Antriebsstrang nach Anspruch 5, **dadurch gekennzeichnet, dass** das Getriebe (22) an dem Verbindungsteil (80) befestigt ist.

7. Antriebsstrang nach Anspruch 5, **dadurch gekennzeichnet, dass** das Verbindungsteil (80) ein Teil eines Getriebegehäuses (56) ausbildet.

8. Antriebsstrang nach einem der Ansprüche 5 bis 7, **dadurch gekennzeichnet, dass** der Generator (24) an dem Verbindungsteil (80) befestigt ist.

9. Antriebsstrang nach Anspruch 5, 6 oder 8, **dadurch gekennzeichnet, dass** das Verbindungsteil (80) ein Teil eines Generatorgehäuses (54) ausbildet.

10. Windkraftanlage (10) mit einer Gondel (20), welche ein Maschinenbett (42) aufweist, und mit einem Antriebsstrang nach einem der vorhergehenden Ansprüche, wobei das Rotorlagergehäuse (40) an dem Maschinenbett (42) befestigt ist, wobei das Getriebe (22) über das Rotorlagergehäuse (40) an dem Maschinenbett (42) befestigt ist und wobei der Generator (24) über das Rotorlagergehäuse (40) an dem Maschinenbett (42) befestigt ist.
